# EUROPÄISCHE PATENTSCHRIFT

(11) **EP 4 479 806 B1**
(45) Veröffentlichungstag und Bekanntmachung des Hinweises auf die Patenterteilung: **14.01.2026**
(21) Anmeldenummer: 23723182.4
(22) Anmeldetag: 28.04.2023
(51) Int. Cl.: G05B 19/404, G05B 19/416

(54) **KOMPENSATION DER WERKZEUGABDRÄNGUNG DURCH DYNAMISCHES ANPASSEN DER WERKZEUGGEOMETRIE**
COMPENSATION FOR TOOL DEFLECTION THROUGH DYNAMIC ADJUSTMENT OF TOOL GEOMETRY
COMPENSATION DE LA DÉFLEXION D'OUTIL PAR AJUSTEMENT DYNAMIQUE DE LA GÉOMÉTRIE D'OUTIL

(30) Priorität: 14.06.2022 EP 22178956
(43) Veröffentlichungstag der Anmeldung: 25.12.2024
(73) Patentinhaber: Siemens Aktiengesellschaft, 80333 München (DE)
(72) Erfinder: PITZ, Thomas, 71277 Rutesheim (DE); SPIELMANN, Ralf, 70569 Stuttgart (DE)
(74) Vertreter: Siemens Patent Attorneys
(86) Internationale Anmeldenummer: PCT/EP2023/061199
(87) Internationale Veröffentlichungsnummer: WO 2023/241846

(56) Entgegenhaltungen:
- EP-A1- 2 871 547
- EP-A1- 3 708 297
- DE-A1- 10 044 306
- US-A- 5 255 199
- US-A1- 2008 105 094

## Beschreibung

Die vorliegende Erfindung geht aus von einem Betriebsverfahren für eine Werkzeugmaschine gemäss Anspruch 1.

Die vorliegende Erfindung geht weiterhin aus von einem Steuerprogramm für eine numerische Steuerung, wobei das Steuerprogramm Maschinencode umfasst, dessen Abarbeitung durch die numerische Steuerung bewirkt, dass die numerische Steuerung ein derartiges Betriebsverfahren ausführt.

Die vorliegende Erfindung geht weiterhin aus von einer numerischen Steuerung, die mit einem derartigen Steuerprogramm programmiert ist, so dass sie im Betrieb ein derartiges Betriebsverfahren ausführt.

Die vorliegende Erfindung geht weiterhin aus von einer Werkzeugmaschine gemäss Anspruch 11.

Ein derartiges Betriebsverfahren, die entsprechende numerische Steuerung, die zugehörige Werkzeugmaschine und damit im Ergebnis auch das Steuerprogramm sind beispielsweise aus der DE 10 2017 206 931 A1 bzw. der korrespondierenden US 2018/0 307 200 A1 bekannt.

Der EP 2 871 547 A1 und der US 2008/0 105 094 A1 sind ähnliche Sachverhalte zu entnehmen.

Bei der DE 10 2017 206 931 A1 wird zunächst in einem Lernschnitt ein Testwerkstück mit bekannter Geometrie im Gleichlauf mittels eines Fräsers (Bearbeitungswerkzeug der DE 10 2017 206 931 A1) bearbeitet. Im Rahmen des Lernschnittes wird ein Zusammenhang zwischen dem Drehmoment eines Spindelantriebs für den Fräser, das im Wesentlichen proportional zur Bearbeitungskraft ist, und einer dadurch bewirkten Abdrängung des Fräsers ermittelt. Dieser Zusammenhang wird in der numerischen Steuerung hinterlegt und kann dadurch bei der Bearbeitung späterer Werkstücke im Gleichlauf berücksichtigt werden.

Bei der DE 10 2017 206 931 A1 wird der Zusammenhang zwischen dem Drehmoment und der Abdrängung in Form von Achssteifigkeiten ermittelt. Diese Ermittlung erfolgt individuell für die einzelnen Achsen. Die Berücksichtigung erfolgt dadurch, dass die Lagesollwerte für die Achsen in Abhängigkeit von der jeweiligen Achssteifigkeit und der auftretenden Abdrängkraft (Bearbeitungskraft der DE 10 2017 206 931 A1) korrigiert werden.

Die Lehre der DE 10 2017 206 931 A1 führt gegenüber Vorgehensweisen, bei denen keine Berücksichtigung der Bearbeitungskraft erfolgt, zu deutlich verbesserten Ergebnissen. Sie ist jedoch rechentechnisch sehr komplex und bei komplexeren Bearbeitungsvorgängen auch nicht einfach anzuwenden.

Aus der US 2008/0 105 094 A1 ist weiterhin bekannt, in Abhängigkeit von der Bearbeitungskraft die tatsächliche Geometrie des Bearbeitungswerkzeugs zu ändern, beispielsweise mittels innerhalb des Bearbeitungswerkzeugs angeordneter piezoelektrischer Elemente.

Die Aufgabe der vorliegenden Erfindung besteht darin, Möglichkeiten zu schaffen, mittels derer die bei der Bearbeitung des Werkstücks durch das Bearbeitungswerkzeug auftretenden Bearbeitungskräfte auf einfachere Weise berücksichtigt werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 8.

Erfindungsgemäß wird ein Betriebsverfahren der eingangs genannten Art dadurch ausgestaltet, dass die numerische Steuerung die Bearbeitungskraft dadurch berücksichtigt, dass sie steuerungsintern die geometrische Abmessung des Bearbeitungswerkzeugs während der Bearbeitung dynamisch und in Echtzeit in Abhängigkeit von der Bearbeitungskraft variiert, ohne dabei das Bearbeitungswerkzeug selbst zu ändern.

Die vorliegende Erfindung fußt also auf der Idee, dass man anstelle der Berechnung einer neuen Bahn schlichtweg rein rechnerisch davon ausgehen kann, dass sich die Geometrie des Bearbeitungswerkzeugs geändert hat. Der numerischen Steuerung wird sozusagen vorgegaukelt, dass sich die Geometrie des Bearbeitungswerkzeugs geändert hat. In der Realität hat sich hingegen die Geometrie des Bearbeitungswerkzeugs nicht geändert. Das Bearbeitungswerkzeug wurde jedoch durch die Bearbeitungskraft abgedrängt. Wird - rein rechnerisch - die Änderung der Geometrie geeignet gewählt, kann damit die Wirkung der Abdrängung kompensiert werden.

Die erfindungsgemäße Vorgehensweise vereinfacht zunächst den Lernschnitt. Denn der Lernschnitt muss zwar - ebenso wie bei der DE 10 2017 206 931 A1 - für jedes Bearbeitungswerkzeug durchgeführt werden. Es muss aber lediglich ein einzelner Zusammenhang für die Abhängigkeit der geometrischen Abmessung von der Bearbeitungskraft ermittelt werden. Hingegen ist keine Ermittlung von derartigen Zusammenhängen einzeln für die lagegeregelten Achsen erforderlich.

Auch der spätere Betrieb der Werkzeugmaschine ist - aus Sicht der numerischen Steuerung - erheblich einfacher. Denn es muss lediglich die geometrische Abmessung des Bearbeitungswerkzeugs variiert werden. Der zugehörige Einfluss auf die Steuerbefehle für die einzelnen lagegeregelten Achsen ergibt sich, ausgehend von der variierten geometrischen Abmessung des Bearbeitungswerkzeugs, von selbst.

Die für die Bearbeitungskraft charakteristischen Istgrößen können messtechnisch erfasst sein. Alternativ können die Istgrößen auch ermittelt sein. Beispiele werden nachstehend in Verbindung mit den bevorzugten Ausgestaltungen erläutert.

Besonders einfach und zuverlässig arbeitet das erfindungsgemäße Betriebsverfahren, wenn das Bearbeitungswerkzeug als Fräser ausgebildet ist, so dass die Bearbeitung des Werkstücks durch das Bearbeitungswerkzeug ein Fräsen ist. In diesem Fall ist die geometrische Abmessung des Bearbeitungswerkzeugs ein Fräserradius des Fräsers, und die numerische Steuerung muss lediglich den Fräserradius in Abhängigkeit von der Bearbeitungskraft variieren.

Oftmals arbeitet das erfindungsgemäße Betriebsverfahren im Falle eines Fräsers nur zuverlässig, wenn die Bearbeitung des Werkstücks durch den Fräser im Gleichlauf erfolgt. Dies kann jedoch ohne weiteres gewährleistet werden. Der Begriff "Gleichlauf" hat für den Fachmann eine fest umrissene Bedeutung.

Die für die Bearbeitungskraft charakteristischen Istgrößen können beim Fräsen einen Stromwert umfassen, mit dem ein den Fräser rotierender Spindelantrieb der Werkzeugmaschine beaufschlagt wird. Der Stromwert kann mittels eines Stromsensors messtechnisch erfasst werden. Alternativ kann der Stromwert auch ermittelt werden. Insbesondere kann es sich im Falle einer Ermittlung um den Sollstrom handeln, mit dem der Spindelantrieb beaufschlagt werden soll. Der Stromwert kann, soweit erforderlich, auf verschiedene Art und Weise vorverarbeitet werden. Beispielsweise kann nur ein momentbildender Strom verwertet werden und/oder kann der Stromwert um einen Offset korrigiert werden. Die entsprechenden Vorgehensweisen sind als solche aus der DE 10 2017 206 931 A1 bekannt.

Das erfindungsgemäße Betriebsverfahren ist nicht auf ein Fräsen beschränkt. Alternativ kann das Bearbeitungswerkzeug beispielsweise als Drehstahl ausgebildet sein, so dass die Bearbeitung des Werkstücks durch das Bearbeitungswerkzeug ein Drehen (englisch: lathing) ist. In diesem Fall ist die geometrische Abmessung des Bearbeitungswerkzeugs eine Länge des Drehstahls, und die numerische Steuerung muss lediglich die Länge des Drehstahls in Abhängigkeit von der Bearbeitungskraft variieren.

Die für die Bearbeitungskraft charakteristischen Istgrößen können beim Drehen einen Stromwert umfassen, mit dem ein das Werkstück rotierender Spindelantrieb der Werkzeugmaschine beaufschlagt wird. Der Stromwert kann mittels eines Stromsensors messtechnisch erfasst werden oder auch ermittelt werden. Die obenstehenden Ausführungen für den Fall eines Fräsers sind in analoger Weise anwendbar. Dies gilt auch für die gegebenenfalls erforderlichen Vorverarbeitungen des Stromwertes.

Das erfindungsgemäße Betriebsverfahren kann auch bei anderen Bearbeitungsvorgängen eingesetzt werden, beispielsweise beim Schleifen mittels eines Schleifwerkzeugs.

Vorzugsweise ermittelt die numerische Steuerung zunächst in Abhängigkeit von der Bearbeitungskraft die geometrische Abmessung, ermittelt sodann unter Verwertung des Teileprogramms und der ermittelten geometrischen Abmessung Lagesollwerte für die lagegeregelten Achsen und ermittelt schließlich anhand der Lagesollwerte und von Lageistwerten der lagegeregelten Achsen die Steuersignale für die lagegeregelten Achsen. Diese Vorgehensweise ermöglicht eine besonders einfache Berücksichtigung der Bearbeitungskraft bei der Ermittlung der Steuersignale.

Für die Ermittlung der Steuersignale ist die Differenz der Lagesollwerte und der Lageistwerte relevant. Anstelle einer Berücksichtigung der geometrischen Abmessung bei der Ermittlung der Lagesollwerte könnte die Berücksichtigung der geometrischen Abmessung daher alternativ auch durch eine Korrektur der Lageistwerte oder der Differenz von Lagesollwerten und Lageistwerten erfolgen.

Vorzugsweise ermittelt die numerische Steuerung in Abhängigkeit von der Bearbeitungskraft einen Korrekturwert für die geometrische Abmessung und ermittelt die geometrische Abmessung durch Addieren einer der numerischen Steuerung bekannten, von der Bearbeitungskraft unabhängigen geometrischen Basisabmessung und des Korrekturwerts.

Die Aufgabe wird weiterhin durch ein Steuerprogramm mit den Merkmalen des Anspruchs 9 gelöst. Erfindungsgemäß bewirkt die Abarbeitung des Steuerprogramms durch die numerische Steuerung, dass die numerische Steuerung ein erfindungsgemäßes Betriebsverfahren ausführt.

Die Aufgabe wird weiterhin durch eine numerische Steuerung für eine Werkzeugmaschine mit den Merkmalen des Anspruchs 10 gelöst. Erfindungsgemäß ist die numerische Steuerung mit einem erfindungsgemäßen Steuerprogramm programmiert, so dass die numerische Steuerung ein erfindungsgemäßes Betriebsverfahren ausführt.

Die Aufgabe wird weiterhin durch eine Werkzeugmaschine mit den Merkmalen des Anspruchs 11 gelöst. Erfindungsgemäß ist bei einer Werkzeugmaschine der eingangs genannten Art die numerische Steuerung als erfindungsgemäße numerische Steuerung ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine erste Ausgestaltung einer Werkzeugmaschine,
- FIG 2: eine zweite Ausgestaltung einer Werkzeugmaschine,
- FIG 3: ein Ablaufdiagramm,
- FIG 4: einen Verlauf einer Bearbeitungskraft,
- FIG 5: einen korrespondierenden Verlauf einer geometrischen Abmessung,
- FIG 6: eine Abdrängung eines Bearbeitungswerkzeugs,
- FIG 7: einen weiteren Verlauf einer Bearbeitungskraft und
- FIG 8: einen korrespondierenden Verlauf einer geometrischen Abmessung.

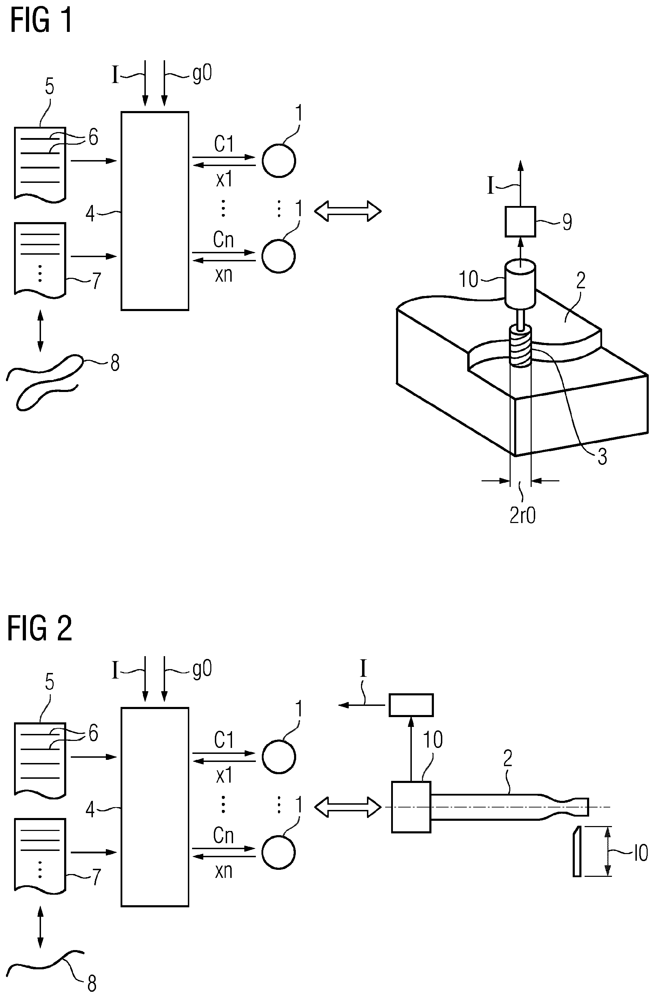

Gemäß den FIG 1 und 2 weist eine Werkzeugmaschine eine Anzahl n von lagegeregelten Achsen 1 auf. Die Anzahl n an lagegeregelten Achsen 1 kann nach Bedarf bestimmt sein. Minimal liegt die Anzahl n bei 1. Meist ist die Anzahl n an lagegeregelten Achsen 1 jedoch größer als 1. In der Werkzeugmaschine ist ein Werkstück 2 gehalten (eingespannt). Das Werkstück 2 soll in der Werkzeugmaschine mittels eines Bearbeitungswerkzeugs 3 der Werkzeugmaschine materialabtragend bearbeitet werden.

Die Werkzeugmaschine weist weiterhin eine numerische Steuerung 4 auf. Die numerische Steuerung 4 ist mit den lagegeregelten Achsen 1 verbunden. Die Verbindung der numerischen Steuerung 4 mit den lagegeregelten Achsen 1 dient einerseits dazu, Steuersignale Ci (i = 1, 2, ..., n) an die lagegeregelten Achsen 1 auszugeben. Andererseits dient die Verbindung der numerischen Steuerung 4 mit den lagegeregelten Achsen 1 dazu, von den lagegeregelten Achsen 1 jeweilige Lageistwerte xi (i = 1, 2, ..., n) entgegenzunehmen. Im Ergebnis werden die lagegeregelten Achsen 1 dadurch von der numerischen Steuerung 4 gesteuert. Durch die entsprechende Ansteuerung der lagegeregelten Achsen 1 wird das Bearbeitungswerkzeug 3 von der numerischen Steuerung 4 relativ zum Werkstück 2 lagegeregelt verfahren.

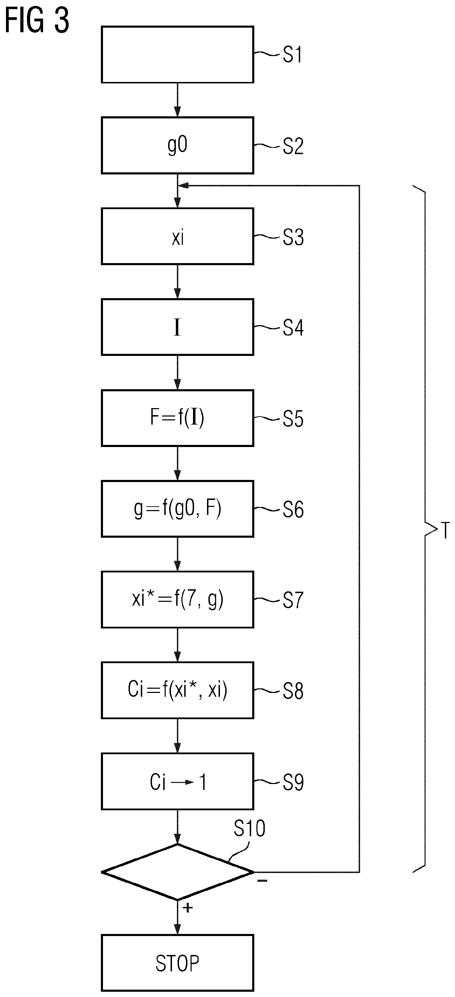

Die numerische Steuerung 4 ist mit einem Steuerprogramm 5 (Systemprogramm) programmiert. Das Steuerprogramm 5 umfasst Maschinencode 6, der von der numerischen Steuerung 4 abarbeitbar ist. Die Abarbeitung des Maschinencodes 6 durch die numerische Steuerung 4 bewirkt, dass die numerische Steuerung 4 ein Betriebsverfahren ausführt, das nachstehend in Verbindung mit FIG 3 näher erläutert wird.

Gemäß FIG 3 nimmt die numerische Steuerung 4 in einem Schritt S1 ein Teileprogramm 7 (Nutzprogramm) entgegen. Das Teileprogramm 7 legt entsprechend der schematischen Darstellung in FIG 1 eine Bahn 8 fest, entlang derer das Werkstück 2 mittels des Bearbeitungswerkzeugs 3 materialabtragend bearbeitet werden soll.

In einem Schritt S2 wird der numerischen Steuerung 4 eine geometrische Basisabmessung g0 des Bearbeitungswerkzeugs 3 bekannt. Im Falle der Ausgestaltung der Werkzeugmaschine gemäß FIG 1, bei welcher das Bearbeitungswerkzeug 3 als Fräser ausgebildet ist und demzufolge die Bearbeitung des Werkstücks 2 durch das Bearbeitungswerkzeug 3 ein Fräsen ist, ist die geometrische Basisabmessung g0 ein anfänglicher Fräserradius r0 des Fräsers. Beim Fräsen liegt die Anzahl n an lagegeregelten Achsen 1 meist bei 3 oder darüber. Im Falle der Ausgestaltung der Werkzeugmaschine gemäß FIG 2, bei welcher das Bearbeitungswerkzeug 3 als Drehstahl ausgebildet ist und demzufolge die Bearbeitung des Werkstücks 2 durch das Bearbeitungswerkzeug 3 ein Drehen ist, ist die geometrische Basisabmessung g0 eine anfängliche Drehstahllänge 10 des Drehstahls. Beim Drehen liegt die Anzahl n an lagegeregelten Achsen 1 meist bei 2 oder darüber.

Die Schritte S1 und S2 müssen jeweils nur dann ausgeführt werden, wenn sich diesbezügliche Änderungen ergeben, wenn also beispielsweise das Teileprogramm 7 geändert wird oder das Bearbeitungswerkzeug 3 gewechselt wird. Ein Schritt S3 und auf den Schritt S3 folgende Schritte S4 bis S10 hingegen realisieren die für die Bearbeitung des Werkstücks 2 durch das Bearbeitungswerkzeug 3 erforderliche Ansteuerung der lagegeregelten Achsen 1. Die Schritte S3 bis S10 werden von der numerischen Steuerung 4 mit einem Lageregeltakt T zyklisch immer wieder ausgeführt. Der Lageregeltakt T liegt meist unter 1 ms, beispielsweise bei 125 µs oder 250 µs. Die genannten Zahlenwerte sind rein beispielhaft.

Im Schritt S3 nimmt die numerische Steuerung 4 von den lagegeregelten Achsen 1 deren jeweilige Lageistwerte xi entgegen. Im Schritt S4 nimmt die numerische Steuerung 4 von einer Einrichtung 9 der Werkzeugmaschine eine Anzahl von Istgrößen I entgegen. Die numerische Steuerung 4 ist - zumindest zu diesem Zweck - mit der Einrichtung 9 (siehe die FIG 1 und 2) verbunden. Unabhängig von der Anzahl und Art der Istgrößen I sind die Istgrößen I derart bestimmt, dass sie für eine Bearbeitungskraft F charakteristisch sind, die von dem Werkstück 2 auf das Bearbeitungswerkzeug 3 ausgeübt wird, während das Werkstück 2 durch das Bearbeitungswerkzeug 3 bearbeitet wird. Da der Schritt S4 in die zyklische Abarbeitung der Schritte S3 bis S10 eingebunden ist, erfolgt das Entgegennehmen der Istgrößen I während der Bearbeitung des Werkstücks 2 durch das Bearbeitungswerkzeug 3 und in Echtzeit. Die Istgrößen I werden von der Einrichtung 9 entweder messtechnisch erfasst oder von ihr rechnerisch ermittelt. Eine rechnerische Ermittlung kann auf vorgegebenen und/oder auf messtechnisch erfassten Größen basieren.

Die Istgrößen I können insbesondere einen Stromwert (Sollwert oder Istwert) umfassen, mit dem ein Spindelantrieb 10 der Werkzeugmaschine (siehe die FIG 1 und 2) beaufschlagt wird. Im Falle der Ausgestaltung der Werkzeugmaschine gemäß FIG 1 (Bearbeitungswerkzeug 3 als Fräser ausgebildet) wird mittels des Spindelantriebs 10 der Fräser rotiert. Im Falle der Ausgestaltung der Werkzeugmaschine gemäß FIG 2 (Bearbeitungswerkzeug 3 als Drehstahl ausgebildet) wird mittels des Spindelantriebs 10 das Werkstück 2 rotiert.

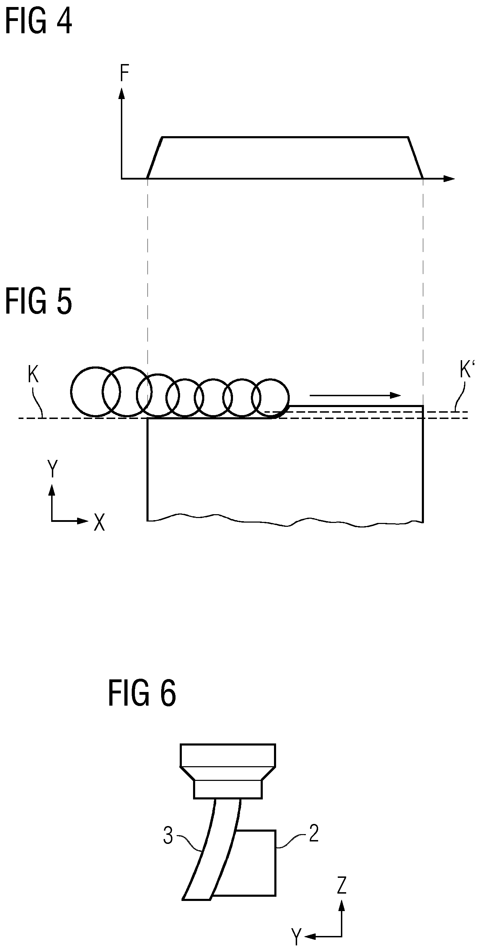

Im Schritt S5 ermittelt die numerische Steuerung 4 anhand der Istgrößen I die Bearbeitungskraft **F.** Im Schritt S6 variiert die numerische Steuerung 4 in Abhängigkeit von der Bearbeitungskraft F eine geometrische Abmessung g des Bearbeitungswerkzeugs 3. Dieses Variieren erfolgt aufgrund der Einbindung des Schrittes S6 in die Abfolge der Schritte S3 bis S10 dynamisch und in Echtzeit während der Bearbeitung des Werkstücks 2 durch das Bearbeitungswerkzeug 3. Beispielsweise kann die numerische Steuerung 4 im Schritt S6 zunächst einen Korrekturwert δg ermitteln und sodann die geometrische Abmessung g durch Addieren der geometrischen Basisabmessung g0 und des Korrekturwerts δg ermitteln. Im Falle der Ausgestaltung der Werkzeugmaschine gemäß FIG 1 (Bearbeitungswerkzeug 3 als Fräser ausgebildet wird also der Fräserradius des Fräsers variiert. Im Falle der Ausgestaltung der Werkzeugmaschine gemäß FIG 2 (Bearbeitungswerkzeug 3 als Drehstahl ausgebildet) wird hingegen die Drehstahllänge des Drehstahls variiert. Die FIG 4 und 5 zeigen rein beispielhaft für einen einfachen Fall (Bearbeitungswerkzeug 3 als Fräser ausgebildet, Verfahrbewegung in X-Richtung, Orientierung des Fräsers vom Ansatz her parallel zur Z-Richtung) den Verlauf der Bearbeitungskraft F und der geometrischen Abmessung g, hier des wirksamen Fräserradius. FIG 6 zeigt weiterhin schematisch und deutlich übertrieben die durch die Bearbeitungskraft F bewirkte Abdrängung des Bearbeitungswerkzeugs 3.

Die Vorgehensweise der vorliegenden Erfindung wird nachstehend unter Bezugnahme auf die FIG 4 bis 6 anschaulich erläutert. Die Erläuterung erfolgt hierbei in Verbindung mit einer Ausgestaltung des Bearbeitungswerkzeugs 3 als Fräser. Die Erläuterung ist - in entsprechend angepasster Weise - aber auch anwendbar, wenn das Bearbeitungswerkzeug 3 andersartig ausgestaltet ist.

Der Fräser hat eine bestimmte geometrische Abmessung g0, beispielsweise im Falle eines Fräsers den Radius r0. Wenn das Werkstück 2 entlang der in FIG 5 mit K bezeichneten Linie bearbeitet werden soll und das Bearbeitungswerkzeug 3 unendlich steif wäre, müsste die Drehachse des Bearbeitungswerkzeugs 3 exakt den Abstand r0 von der Linie K aufweisen. Daher wird der numerischen Steuerung 4 im Schritt S2 die geometrische Basisabmessung g0 des Bearbeitungswerkzeugs 3 bekannt gemacht, so dass die numerische Steuerung 4 die geometrische Basisabmessung g0 - im Falle des Fräsers den Radius r0 - entsprechend berücksichtigen kann. Eine derartige Vorgehensweise ist Standard bei jeder numerischen Steuerung 4.

Durch die Bearbeitungskraft F wird das Bearbeitungswerkzeug 3 jedoch entsprechend der Darstellung in FIG 6 abgedrängt. Der Radius r0 des Fräsers bzw. allgemein die geometrische Abmessung g0 des Bearbeitungswerkzeugs 3 hat sich zwar nicht geändert. Dennoch würde, wenn keine weiteren Maßnahmen ergriffen würden, beispielsweise anstelle der Linie K entlang einer Linie K' gefräst. Um auf die Linie K zu kommen, muss also im Ergebnis der Abstand der Drehachse des Bearbeitungswerkzeugs 3 verringert werden. Dies wird erfindungsgemäß dadurch erreicht, dass - nochmals: rein rechnerisch intern der numerischen Steuerung 4 - dynamisch in Abhängigkeit von der Bearbeitungskraft F der Fräserradius bzw. allgemein die geometrische Abmessung g des Bearbeitungswerkzeugs 3 entsprechend angepasst wird. Dadurch kann die Abdrängung rein rechnerisch kompensiert werden. Der numerischen Steuerung 4 wird also sozusagen ein sich dynamisch ändernder "falscher Fräserradius" (bzw. allgemein eine sich dynamisch ändernde falsche geometrische Abmessung g) vorgegaukelt, so dass genau die Abdrängung kompensiert wird, die durch die Bearbeitungskraft F hervorgerufen wird. Das Bearbeitungswerkzeug 3 selbst hingegen wird nicht geändert.

Im Schritt S7 ermittelt die numerische Steuerung 4 Lagesollwerte xi* (i = 1, 2, ..., n) für die lagegeregelten Achsen 1. Die Ermittlung der Lagesollwerte xi* erfolgt unter Verwertung des Teileprogramms und der geometrischen Abmessung g, wie sie im Schritt S6 ermittelt wurde. Die Ermittlung der Lagesollwerte xi* erfolgt - eine entsprechende Ansteuerung der lagegeregelten Achsen 1 vorausgesetzt - derart, dass das Werkstück 2 durch das Bearbeitungswerkzeug 3 entlang der durch das Teileprogramm 7 festgelegten Bahn 8 materialabtragend bearbeitet wird.

Im Schritt S8 ermittelt die numerische Steuerung 4 anhand der Lagesollwerte xi* und der Lageistwerte xi der lagegeregelten Achsen 1 die Steuersignale Ci für die lagegeregelten Achsen 1. Die Steuersignale Ci können beispielsweise Drehzahlsollwerte oder Stromsollwerte oder eine Kombination derartiger Sollwerte sein. Im Schritt S9 steuert die numerische Steuerung 4 die lagegeregelten Achsen 1 entsprechend den ermittelten Steuersignalen Ci an. Dadurch wird das Bearbeitungswerkzeug 3 relativ zum Werkstück 2 entsprechend lagegeregelt verfahren.

Im Schritt S10 prüft die numerische Steuerung 4, ob das Teileprogramm 7 vollständig abgearbeitet ist. Wenn dies nicht der Fall ist, geht die numerische Steuerung 4 zum Schritt S3 zurück, wobei im Schritt S7 die Lagesollwerte xi* entsprechend dem Fortschritt bei der Abarbeitung des Teileprogramms 7 immer wieder neu ermittelt werden. Anderenfalls ist die Vorgehensweise von FIG 3 abgeschlossen.

Um die erfindungsgemäße dynamische Variierung der geometrischen Abmessung g vornehmen zu können, muss der numerischen Steuerung 4 die entsprechende Abhängigkeit von der Bearbeitungskraft F bekannt sein. Diese Abhängigkeit kann beispielsweise vorab einmalig ermittelt werden und sodann in der numerischen Steuerung 4 abgespeichert werden. Es sind jedoch auch andere Vorgehensweisen möglich. Im einfachsten Fall besteht eine rein lineare Abhängigkeit, so dass der Korrekturwert δg proportional zur Bearbeitungskraft F ist. Es sind jedoch auch andere Abhängigkeiten möglich.

Zusammengefasst betrifft die vorliegende Erfindung somit folgenden Sachverhalt:
Eine numerische Steuerung 4 einer Werkzeugmaschine nimmt ein Teileprogramm 7 entgegen, das eine Bahn 8 festlegt, entlang derer ein Werkstück 2 mittels eines Bearbeitungswerkzeugs 3 der Werkzeugmaschine materialabtragend bearbeitet werden soll. Die numerische Steuerung 4 ermittelt für eine Anzahl von lagegeregelten Achsen 1 der Werkzeugmaschine, mittels derer das Bearbeitungswerkzeug 3 relativ zum Werkstück 1 lagegeregelt verfahren wird, unter Verwertung des Teileprogramms 7 Steuerbefehle Ci und steuert die lagegeregelten Achsen 1 entsprechend den ermittelten Steuerbefehlen Ci an. Die numerische Steuerung 4 ermittelt die Steuerbefehle Ci derart, dass das Werkstück 2 von dem Bearbeitungswerkzeug 3 entlang der durch das Teileprogramm 7 festgelegten Bahn 8 materialabtragend bearbeitet wird. Die numerische Steuerung 4 nimmt während der Bearbeitung des Werkstücks 2 durch das Bearbeitungswerkzeug 3 in Echtzeit für eine während der Bearbeitung des Werkstücks 2 durch das Bearbeitungswerkzeug 3 von dem Werkstück 2 auf das Bearbeitungswerkzeug 3 ausgeübte Bearbeitungskraft F charakteristische Istgrößen I entgegen. Die numerische Steuerung 4 berücksichtigt bei der Ermittlung der Steuerbefehle Ci eine geometrische Abmessung g des Bearbeitungswerkzeugs 3 und die Bearbeitungskraft F. Die Berücksichtigung der Bearbeitungskraft F erfolgt dadurch, dass die geometrische Abmessung g des Bearbeitungswerkzeugs 3 während der Bearbeitung dynamisch und in Echtzeit in Abhängigkeit von der Bearbeitungskraft F variiert wird.

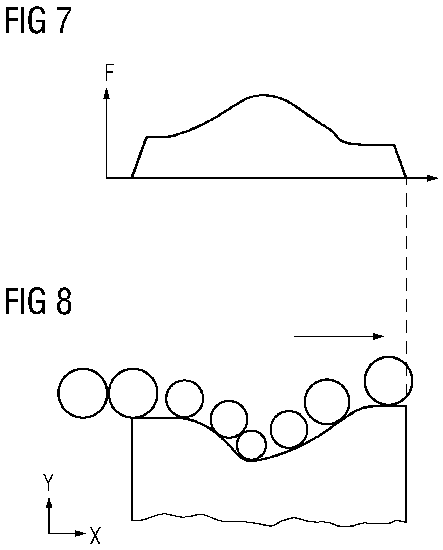

Die vorliegende Erfindung weist viele Vorteile auf. Insbesondere ist auch eine Anwendung des Betriebsverfahrens bei der Bearbeitung einer freien Kontur ohne weiteres möglich. Denn es muss keine Rückberechnung der Bearbeitungskraft F auf die einzelnen lagegeregelten Achsen 1 vorgenommen werden. Auch ist keine Interpretation der Kraftrichtung pro lagegeregelter Achse 1 erforderlich. Durch die Korrektur der geometrischen Abmessung g kann dies erheblich einfacher erfolgen. Die FIG 7 und 8 zeigen rein beispielhaft für einen zu den FIG 4 und 5 analogen Fall (Bearbeitungswerkzeug 3 als Fräser ausgebildet, Orientierung des Fräsers vom Ansatz her parallel zur Z-Richtung) für eine freie Kontur (Bewegung des Fräsers sowohl in X-Richtung als auch in Y-Richtung) den Verlauf der Bearbeitungskraft F und der geometrischen Abmessung g, hier des wirksamen Fräserradius. Weiterhin ist das erfindungsgemäße Betriebsverfahren auch bei anderen Bearbeitungstechnologien einsetzbar, beispielsweise beim Schleifen.

## Patentansprüche

1. Betriebsverfahren für eine Werkzeugmaschine,
- wobei eine numerische Steuerung (4) der Werkzeugmaschine ein Teileprogramm (7) entgegennimmt, das eine Bahn (8) festlegt, entlang derer ein Werkstück (2) mittels eines Bearbeitungswerkzeugs (3) der Werkzeugmaschine materialabtragend bearbeitet werden soll,
- wobei die numerische Steuerung (4) für eine Anzahl von lagegeregelten Achsen (1) der Werkzeugmaschine, mittels derer das Bearbeitungswerkzeug (3) relativ zum Werkstück (1) lagegeregelt verfahren wird, unter Verwertung des Teileprogramms (7) Steuerbefehle (Ci) ermittelt und die lagegeregelten Achsen (1) entsprechend den ermittelten Steuerbefehlen (Ci) ansteuert,
- wobei die numerische Steuerung (4) die Steuerbefehle (Ci) derart ermittelt, dass das Werkstück (2) von dem Bearbeitungswerkzeug (3) entlang der durch das Teileprogramm (7) festgelegten Bahn (8) materialabtragend bearbeitet wird,
- wobei die numerische Steuerung (4) während der Bearbeitung des Werkstücks (2) durch das Bearbeitungswerkzeug (3) in Echtzeit eine Anzahl von für eine während der Bearbeitung des Werkstücks (2) durch das Bearbeitungswerkzeug (3) von dem Werkstück (2) auf das Bearbeitungswerkzeug (3) ausgeübte Bearbeitungskraft (F) charakteristischen Istgrößen (I) entgegennimmt,
- wobei die numerische Steuerung (4) bei der Ermittlung der Steuerbefehle (Ci) eine geometrische Abmessung (g) des Bearbeitungswerkzeugs (3) und die Bearbeitungskraft (F) berücksichtigt,
**dadurch gekennzeichnet,**
**dass** die numerische Steuerung (4) die Bearbeitungskraft (F) dadurch berücksichtigt, dass sie steuerungsintern die geometrische Abmessung (g) des Bearbeitungswerkzeugs (3) während der Bearbeitung dynamisch und in Echtzeit in Abhängigkeit von der Bearbeitungskraft (F) variiert, ohne dabei das Bearbeitungswerkzeug (3) selbst zu ändern.

2. Betriebsverfahren nach Anspruch 1,
**dadurch gekennzeichnet,**
**dass** das Bearbeitungswerkzeug (3) als Fräser ausgebildet ist, so dass die Bearbeitung des Werkstücks (2) durch das Bearbeitungswerkzeug (3) ein Fräsen ist, und dass die geometrische Abmessung (g) des Bearbeitungswerkzeugs (3) ein Fräserradius des Fräsers ist.

3. Betriebsverfahren nach Anspruch 2,
**dadurch gekennzeichnet,**
**dass** die für die Bearbeitungskraft (F) charakteristischen Istgrößen (I) einen Stromwert umfassen, mit dem ein den Fräser rotierender Spindelantrieb (10) der Werkzeugmaschine beaufschlagt wird.

4. Betriebsverfahren nach Anspruch 1,
**dadurch gekennzeichnet,**
**dass** das Bearbeitungswerkzeug (3) als Drehstahl ausgebildet ist, so dass die Bearbeitung des Werkstücks (2) durch das Bearbeitungswerkzeug (3) ein Drehen ist, und dass die geometrische Abmessung (g) des Bearbeitungswerkzeugs (3) eine Länge des Drehstahls ist.

5. Betriebsverfahren nach Anspruch 4,
**dadurch gekennzeichnet,**
**dass** die für die Bearbeitungskraft (F) charakteristischen Istgrößen (I) einen Stromwert umfassen, mit dem ein das Werkstück (2) rotierender Spindelantrieb (10) der Werkzeugmaschine beaufschlagt wird.

6. Betriebsverfahren nach einem der Ansprüche 1 bis 5,
**dadurch gekennzeichnet,**
**dass** die numerische Steuerung (4) in Abhängigkeit von der Bearbeitungskraft (F) die geometrische Abmessung (g) ermittelt, unter Verwertung des Teileprogramms (7) und der ermittelten geometrischen Abmessung (g) Lagesollwerte (xi*) für die lagegeregelten Achsen (1) ermittelt und anhand der Lagesollwerte (xi*) und von Lageistwerten (xi) der lagegeregelten Achsen (1) die Steuersignale (Ci) für die lagegeregelten Achsen (1) ermittelt.

7. Betriebsverfahren nach einem der Ansprüche 1 bis 5,
**dadurch gekennzeichnet,**
**dass** die numerische Steuerung (4) in Abhängigkeit von der Bearbeitungskraft (F) die geometrische Abmessung (g) ermittelt, unter Verwertung des Teileprogramms (7) Lagesollwerte (xi*) für die lagegeregelten Achsen (1) ermittelt und anhand einer resultierenden Differenz der Lagesollwerte (xi*) von resultierenden Lageistwerten (xi) der lagegeregelten Achsen (1) die Steuersignale (Ci) für die lagegeregelten Achsen (1) ermittelt und dass die numerische Steuerung (4) die geometrische Abmessung (g) bei der Ermittlung der resultierenden Lageistwerte (xi) oder der resultierenden Differenz berücksichtigt.

8. Betriebsverfahren nach Anspruch 6 oder 7,
**dadurch gekennzeichnet,**
**dass** die numerische Steuerung (4) in Abhängigkeit von der Bearbeitungskraft (F) einen Korrekturwert (δg) für die geometrische Abmessung (g) ermittelt und die geometrische Abmessung (g) durch Addieren einer der numerischen Steuerung (4) bekannten, von der Bearbeitungskraft (F) unabhängigen geometrischen Basisabmessung (g0) und des Korrekturwerts (δg) ermittelt.

9. Steuerprogramm für eine numerische Steuerung (4), wobei das Steuerprogramm Maschinencode (6) umfasst, dessen Abarbeitung durch die numerische Steuerung (4) bewirkt, dass die numerische Steuerung (4) ein Betriebsverfahren nach einem der obigen Ansprüche ausführt.

10. Numerische Steuerung (4) für eine Werkzeugmaschine zum Ausführen eines Betriebsverfahren nach einem der Ansprüche 1 bis 8, wobei die numerische Steuerung (4) mit einem Steuerprogramm (5) nach Anspruch 9 programmiert ist.

11. Werkzeugmaschine,
- wobei die Werkzeugmaschine eine numerische Steuerung (4) aufweist, von der ein Teileprogramm (7) entgegennehmbar ist, das eine Bahn (8) festlegt, entlang derer ein Werkstück (2) materialabtragend bearbeitet werden soll,
- wobei die Werkzeugmaschine eine Anzahl von lagegeregelten Achsen (1) aufweist, mittels derer ein Bearbeitungswerkzeug (3) der Werkzeugmaschine relativ zum Werkstück (2) lagegeregelt verfahrbar ist,
- wobei die numerische Steuerung (4) mit den lagegeregelten Achsen (1) zur Vorgabe von Steuerbefehlen (Ci) an die lagegeregelten Achsen (1) verbunden ist,
- wobei die Werkzeugmaschine eine Einrichtung (9) aufweist, von der während der Bearbeitung des Werkstücks (2) durch das Bearbeitungswerkzeug (3) eine Anzahl von für eine während der Bearbeitung des Werkstücks (2) durch das Bearbeitungswerkzeug (3) von dem Werkstück (2) auf das Bearbeitungswerkzeug (3) ausgeübte Bearbeitungskraft (F) charakteristischen Istgrößen (I) erfassbar oder ermittelbar ist,
- wobei die numerische Steuerung (4) mit der Einrichtung (9) zur Entgegennahme der Istgrößen (I) verbunden ist,
**dadurch gekennzeichnet,**
**dass** die numerische Steuerung (4) als numerische Steuerung nach Anspruch 10 ausgebildet ist.

## Claims

1. Operating method for a machine tool,
- wherein a numerical controller (4) of the machine tool receives a parts program (7) which determines a path (8) along which a workpiece (2) should be machined in a material-removing manner by means of a machining tool (3) of the machine tool,
- wherein for a number of position-controlled axes (1) of the machine tool, by means of which the machining tool (3) is moved in a position-controlled manner relative to the workpiece (1), the numerical controller (4) determines control commands (Ci) by utilising the parts program (7) and controls the position-controlled axes (1) according to the determined control commands (Ci),
- wherein the numerical controller (4) determines the control commands (Ci) in such a way that the workpiece (2) is machined in a material-removing manner by the machining tool (3) along the path (8) determined by the parts program (7),
- wherein during the machining of the workpiece (2) by the machining tool (3), the numerical controller (4) receives, in real time, a number of actual values (I) that are characteristic of a machining force (F) exerted by the workpiece (2) on the machining tool (3) during the machining of the workpiece (2) by the machining tool (3),
- wherein the numerical controller (4) takes a geometric measurement (g) of the machining tool (3) and the machining force (F) into consideration when determining the control commands (Ci),
**characterised in that**
the numerical controller (4) takes the machining force (F) into consideration **in that** in a control-internal manner, during the machining, it varies the geometric measurement (g) of the machining tool (3) dynamically and in real time as a function of the machining force (F) without changing the machine tool (3) itself in the process.

2. Operating method according to claim 1,
**characterised in that**
the machining tool (3) is designed as a milling cutter, so that the machining of the workpiece (2) by the machining tool (3) is a milling operation, and so that the geometric measurement (g) of the machining tool (3) is a milling cutter radius of the milling cutter.

3. Operating method according to claim 2,
**characterised in that**
the actual values (I) that are characteristic of the machining force (F) include a current value which is applied to a spindle drive (10) of the machine tool that is rotating the milling cutter.

4. Operating method according to claim 1,
**characterised in that**
the machining tool (3) is designed as a lathe tool, so that the machining of the workpiece (2) by the machining tool (3) is a lathing operation, and so that the geometric measurement (g) of the machining tool (3) is a length of the lathe tool.

5. Operating method according to claim 4,
**characterised in that**
the actual values (I) that are characteristic of the machining force (F) include a current value which is applied to a spindle drive (10) of the machine tool that is rotating the workpiece (2).

6. Operating method according to one of claims 1 to 5,
**characterised in that**
the numerical controller (4) determines the geometric measurement (g) as a function of the machining force (F), by utilising the parts program (7) and the determined geometric measurement (g) determines position setpoint values (xi*) for the position-controlled axes (1), and on the basis of the position setpoint values (xi*) and of actual position values (xi) of the position-controlled axes (1) determines the control signals (Ci) for the position-controlled axes (1).

7. Operating method according to one of claims 1 to 5,
**characterised in that**
the numerical controller (4) determines the geometric measurement (g) as a function of the machining force (F), by utilising the parts program (7) determines position setpoint values (xi*) for the position-controlled axes (1), and on the basis of a resulting difference between the position setpoint values (xi*) and resulting actual position values (xi) of the position-controlled axes (1) determines the control signals (Ci) for the position-controlled axes (1), and **in that** the numerical controller (4) takes into consideration the geometric measurement (g) when determining the resulting actual position values (xi) or the resulting difference.

8. Operating method according to claim 6 or 7,
**characterised in that**
the numerical controller (4) determines a correction value (δg) for the geometric measurement (g) as a function of the machining force (F) and determines the geometric measurement (g) by adding a basic geometric measurement (g0), which is known to the numerical controller (4) and is independent of the machining force (F), and the correction value (δg).

9. Control program for a numerical controller (4), wherein the control program comprises machine code (6), the processing of which by the numerical controller (4) causes the numerical controller (4) to execute an operating method according to one of the above claims.

10. Numerical controller for a machine tool for implementing an operating method according to one of claims 1 to 8, wherein the numerical controller (4) is programmed with a control program (5) according to claim 9.

11. Machine tool,
- wherein the machine tool has a numerical controller (4), from which a parts program (7) can be received which determines a path (8) along which a workpiece (2) is to be machined in a material-removing manner,
- wherein the machine tool has a number of position-controlled axes (1), by means of which a machining tool (3) of the machine tool can be moved in a position-controlled manner relative to the workpiece (2),
- wherein the numerical controller (4) is connected to the position-controlled axes (1) for the specification of control commands (Ci) to the position-controlled axes (1),
- wherein the machine tool has a device (9), by which during the machining of the workpiece (2) by the machining tool (3) a number of actual values (I) that are characteristic of a machining force (F) exerted by the workpiece (2) on the machining tool (3) during the machining of the workpiece (2) by the machining tool (3) can be captured or determined,
- wherein the numerical controller (4) is connected to the device (9) for receiving the actual values (I),
**characterised in that**
the numerical controller (4) is designed as a numerical controller according to claim 10.

## Revendications

1. Procédé pour faire fonctionner une machine-outil,
- dans lequel une commande (4) numérique reçoit de la machine-outil un programme (7) de pièce, qui fixe une trajectoire (8) le long de laquelle une pièce (2) doit être usinée, avec enlèvement de matière, au moyen d'un outil (3) d'usinage de la machine-outil,
- dans lequel la commande (4) numérique détermine, pour un nombre d'axes (1) réglés en position de la machine-outil, au moyen desquels on déplace, d'une manière réglée en position, l'outil (3) d'usinage par rapport à la pièce (1), des instructions (Ci) de commande en exploitant le programme (7) de pièce et commande les axes (1) réglés en position conformément aux instructions (Ci) de commande déterminées,
- dans lequel la commande (4) numérique détermine les instructions (Ci) de commande de manière à usiner, avec enlèvement de matière, la pièce (2) par l'outil (3) d'usinage le long de la trajectoire (8) fixée par le programme (7) de pièce,
- dans lequel la commande (4) numérique reçoit, pendant l'usinage de la pièce (2) par l'outil (3) d'usinage, en temps réel un nombre de grandeurs (I) réelles caractéristiques d'une force (F) d'usinage appliquée, pendant l'usinage de la pièce (2) par l'outil (3) d'usinage, par la pièce (2) à l'outil (3) d'usinage,
- dans lequel la commande (4) numérique prend en compte, lors de la détermination des instructions (Ci) de commande, une dimension (g) géométrique de l'outil (3) d'usinage et la force (F) d'usinage,
**caractérisé**
**en ce que** la commande (4) numérique prend en compte la force (F) d'usinage par le fait qu'elle fait varier, de manière interne à la commande, dynamiquement et en temps réel en fonction de la force (F) d'usinage, la dimension (g) géométrique de l'outil (3) d'usinage, sans modifier pour autant l'outil (3) d'usinage lui-même.

2. Procédé suivant la revendication 1,
**caractérisé**
**en ce que** l'outil (3) d'usinage est constitué sous la forme d'une fraise, de sorte que l'usinage de la pièce (2) par l'outil (3) d'usinage est un fraisage, et **en ce que** la dimension (g) géométrique de l'outil (3) d'usinage est un rayon du fraisage.

3. Procédé suivant la revendication 2,
**caractérisé**
**en ce que** les grandeurs (I) réelles caractéristiques de la force (F) d'usinage comprennent une valeur du courant, en lequel un entraînement (10) à broche, faisant tourner la fraise de la machine-outil, est alimenté.

4. Procédé suivant la revendication 1,
**caractérisé**
**en ce que** l'outil (3) d'usinage est constitué sous la forme d'un outil de tour, de sorte que l'usinage de la pièce (2) par l'outil (3) d'usinage est un tournage et **en ce que** la dimension (g) géométrique de l'outil (3) est la longueur de l'outil de tour.

5. Procédé suivant la revendication **4,**
**caractérisé**
**en ce que** les grandeurs (I) réelles caractéristiques de la force (F) d'usinage comprennent une valeur de courant, en lequel la l'entraînement (10) à broche, faisant tourner la pièce (2), de la machine-outil est alimenté.

6. Procédé suivant l'une des revendications 1 à 5, **caractérisé**
**en ce que** la commande (4) numérique détermine la dimension (g) géométrique en fonction de la force (F) d'usinage, détermine, en exploitant le programme (7) de pièce et la dimension (g) géométrique déterminée, des valeurs (xi*) de consigne de position des axes (1) réglés en position et, à l'aide des valeurs (xi*) de consigne de position et de valeurs (xi) réelles de position des axes (1) réglés en position, déterminent des signaux (Ci) de commande des axes (1) réglés en position.

7. Procédé suivant l'une des revendications 1 à 5, **caractérisé**
**en ce que** la commande (4) numérique détermine la dimension (g) géométrique en fonction de la force (F) d'usinage, détermine, en exploitant le programme (7) de pièce, des valeurs (xi*) de consigne de position des axes (1) réglés en position et, à l'aide d'une différence qui s'ensuit des valeurs (xi*) de consigne de position aux valeurs (xi) réelles de position qui s'ensuivent des axes (1) réglés en position, détermine les signaux (Ci) de commande des axes (1) réglés en position, et **en ce que** la commande (4) numérique prend en compte la dimension (g) géométrique, lors de la détermination des valeurs (xi) réelles de position qui s'ensuivent ou de la différence qui s'ensuit.

8. Procédé suivant la revendication 6 ou 7,
**caractérisé**
**en ce que** la commande (4) numérique détermine, en fonction de la force (F) d'usinage, une valeur (δg) de correction de la dimension (g) géométrique et détermine la dimension (g) géométrique par addition de la valeur (δg) de correction et d'une dimension (g0) géométrique de base connue de la commande (4) numérique et indépendante de la force (F) d'usinage.

9. Programme de commande d'une commande (4) numérique, dans lequel le programme de commande comprend un code machine (6), dont l'élaboration par la commande (4) numérique fait que la commande (4) numérique exécute un procédé de fonctionnement suivant l'une des revendications précédentes.

10. Commande (4) numérique d'une machine-outil pour l'exécution d'un procédé de fonctionnement suivant l'une des revendications 1 à 8, dans laquelle la commande (4) numérique est programmée par un programme (5) de commande suivant la revendication 9.

11. Machine-outil,
- dans laquelle la machine-outil a une commande (4) numérique, de laquelle peut être reçu un programme (7) de pièce, qui fixe une trajectoire (8) le long de laquelle une pièce (2) doit être usinée avec enlèvement de la matière,
- dans laquelle la machine-outil a un certain nombre d'axes (1) réglés en position, au moyen desquels un outil (3) d'usinage de la machine-outil peut être déplacé d'une manière réglée en position par rapport à la pièce (2),
- dans laquelle la commande (4) numérique est raccordée aux axes (1) réglés en position pour la prescription d'instructions (Ci) de commande aux axes (1) réglés en position,
- dans laquelle la machine-outil a un dispositif (9) par lequel, pendant l'usinage de la pièce (2) par l'outil (3) d'usinage, un certain nombre de grandeurs (I) réelles caractéristiques de la force (F) d'usinage appliquée, pendant l'usinage de la pièce (2) par l'outil (3) d'usinage, par la pièce (2) à l'outil (3) d'usinage peut être détecté ou déterminé,
- dans laquelle la commande (4) numérique est raccordée au dispositif (9) pour la réception des grandeurs (I) réelles,
**caractérisé**
**en ce que** la commande (4) numérique est constituée sous la forme d'une commande numérique suivant la revendication 10.
